# EUROPEAN PATENT APPLICATION

(11) **EP 1 741 954 A2**
(43) Date of publication of application: **10.01.2007**
(21) Application number: 06253544.8
(22) Date of filing: 06.07.2006
(51) Int. Cl.: F16F 15/134

(54) **Twin mass flywheel assembly**

(30) Priority: 09.07.2005 GB 0514153
(71) Applicant: AP Driveline Technologies Limited, Reading Berkshire RG1 7SR (GB)
(72) Inventor: Young, Alastair c/o AP Driveline Technologies Ltd., Leamington Spa Warwickshire CV31 3ER (GB); Curtis, Tony c/o AP Driveline Technologies Limited, Leamington Spa Warwickshire CV31 3ER (GB)
(74) Representative: Moffat, John Andrew

(57) **Abstract**

The present invention relates to a twin mass flywheel assembly (2) including an input mass for connection with a vehicle engine and an output mass (6) for connection with a vehicle drive line, the input and output masses being relatively rotatable against the action of a damping means acting between the input and output masses to absorb or attenuate torsional vibrations emanating from the engine, a radially extending flange (12) secured to an outer peripheral portion of the input mass provided with a plurality of
windows (18) and an axially extending support hub (10) secured to an inner peripheral portion of the flange (12), the output mass (6) being supported from the hub (10). It is known to provide a torsional vibration damper between the input mass and the output mass. It is desirable for the torsional damper to have a low spring rate to avoid potential natural frequency issues, while at the same time only permitting a limited amount of rotational travel between the input mass and the output mass. A twin mass flywheel of the type specified is disclosed further comprising a balance arm assembly rotatably mounted to the hub (10), carrier means (30) and a plurality of spring assemblies (40), said balance arm assembly comprising a central boss (25), a plurality of radially extending arms (26), each of said radially extending arms (26) being adapted to locate within a corresponding one of said plurality of windows (18), and each of said arms (26) being held in position in said window (18) by a pair of spring assemblies (40), each of said spring assemblies (40) being located between at a first end one end of the window (18) and at a second end the carrier means (30).

## Description

The present invention relates to a twin mass flywheel assembly, hereinafter referred to as being of the type specified, including an input mass for connection with a vehicle engine and an output mass for connection with a vehicle drive line, the input and output masses being relatively rotatable against the action of a damping means acting between the input and output masses to absorb or attenuate torsional vibrations emanating from the engine, a radially extending flange secured to an outer peripheral portion of the input mass provided with a plurality of windows and an axially extending support hub secured to an inner peripheral portion of the flange, the output mass being supported from the hub.

It is known to provide a torsional vibration damper between the input mass and the output mass. It is known for the torsional vibration damper to comprise two pairs of compression springs housed in the plurality of windows formed in the radially extending flange and corresponding windows formed in side plates disposed to either side of the radially inwardly extending flange. The side plates are secured to the output mass by spacing rivets. Such an arrangement is known for example from EP 1 521 011.

While such an arrangement functions well, there remain areas where improved performance could be obtained. For example, it is desirable for the torsional damper to have a low spring rate to avoid potential natural frequency issues, while at the same time only permitting a limited amount of rotational travel between the input mass and the output mass.

One solution has been to use only a single pair of compression springs. In such a case the windows are much longer, the compression springs being of a suitable relatively long length. The springs in such instances are produced as curved helices. Such an arrangement has greater spring stability. However, due to the curvature of the compression springs around the windows there is a tendency for the compression springs to become dislodged from the plane of the radially extending flange. In such a case, the spring will rub against an adjacent plate causing unnecessary wear on the spring and generating noise which can be discomfiting to a driver of the vehicle.

It is an advantage of the present invention that these problems are significantly reduced, if not eliminated, while allowing for a low spring rate.

According to a first aspect of the present invention, a twin mass flywheel of the type specified further comprises a balance arm assembly rotatably mounted to the hub, carrier means and a plurality of spring assemblies, said balance arm assembly comprising a central boss, a plurality of radially extending arms, each of said radially extending arms being adapted to locate within a corresponding one of said plurality of windows, and each of said arms being held in position in said window by a pair of spring assemblies, each of said spring assemblies being located between at a first end one end of the window and at a second end the carrier means.

Preferably the twin mass flywheel assembly further comprises side plates disposed to either side of the radially extending flange.

According to a second aspect of the present invention a balance arm assembly comprises a hub, a radially extending flange plate secured to the hub having a plurality of circumferentially spaced windows, a balance arm member rotatably mounted to the hub, carrier means and a plurality of spring assemblies, said balance arm member comprising a central boss, a plurality of radially extending arms, each of said radially extending arms being adapted to locate within a corresponding one of said plurality of windows, and each of said arms being held in position in said window by a pair of spring assemblies, each of said spring assemblies being located between at a first end one end of the window and at a second end the carrier means.

Preferably, each spring assembly comprises a plurality of springs. More preferably, each spring assembly comprises a first compression spring, a second compression spring located within the first compression spring and a third compression spring located within the second compression spring.

Preferably the plurality of windows is two windows.

According to a third aspect of the invention a spring assembly comprises a first outer spring with a second spring and a third spring located within the first spring, the second spring and the third spring being separated by a buffer piece.

According to a fourth aspect of the present invention a twin mass flywheel according to the first aspect of the present invention or a balance arm assembly according to the second aspect of the invention is provided with at least two spring assemblies according to the third aspect of the present invention.

The invention will now be described, by way of example only, with reference to the accompanying drawings, in which:-
Figure 1 shows a side view of a twin mass flywheel according to the present invention;
Figure 2 shows a section along line X-X of Figure 1;
Figure 3 shows a perspective view of the twin mass flywheel of Figure 1;
Figure 4 shows an exploded perspective view of the twin mass flywheel of Figure 1;
Figure 5 shows a perspective view of a spring assembly in accordance with one aspect of the present invention; and
Figure 6 shows an exploded view of the spring assembly shown in Figure 5.

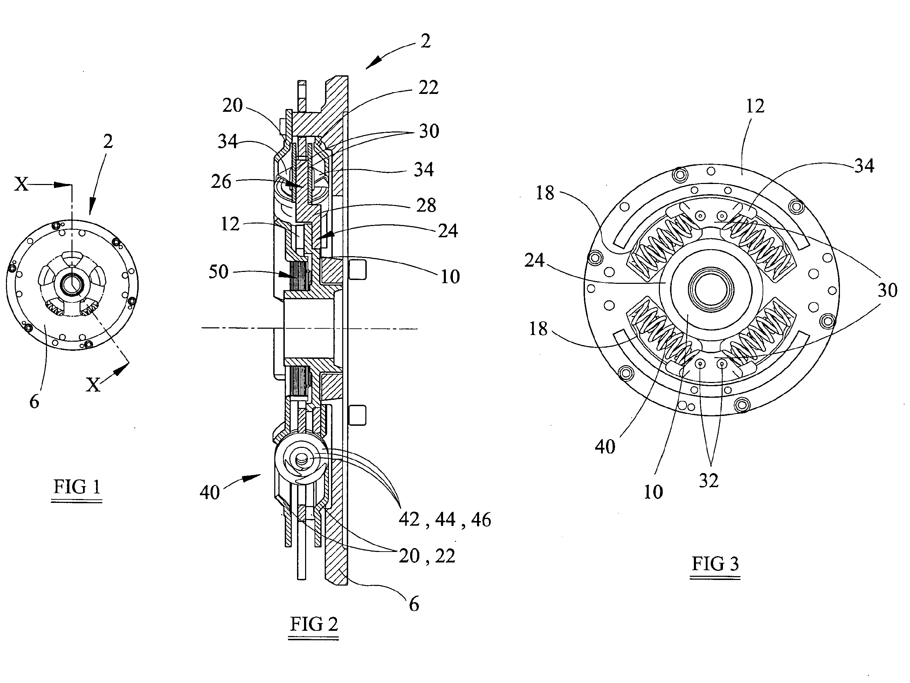

Referring initially to Figures 1 to 4 of the drawings, the output side of a twin mass flywheel assembly 2 is illustrated. The twin mass flywheel assembly 2 comprises an input mass (not shown) and an output mass 6 which are relatively rotatable through a small angular range against a torsional vibrational damper.

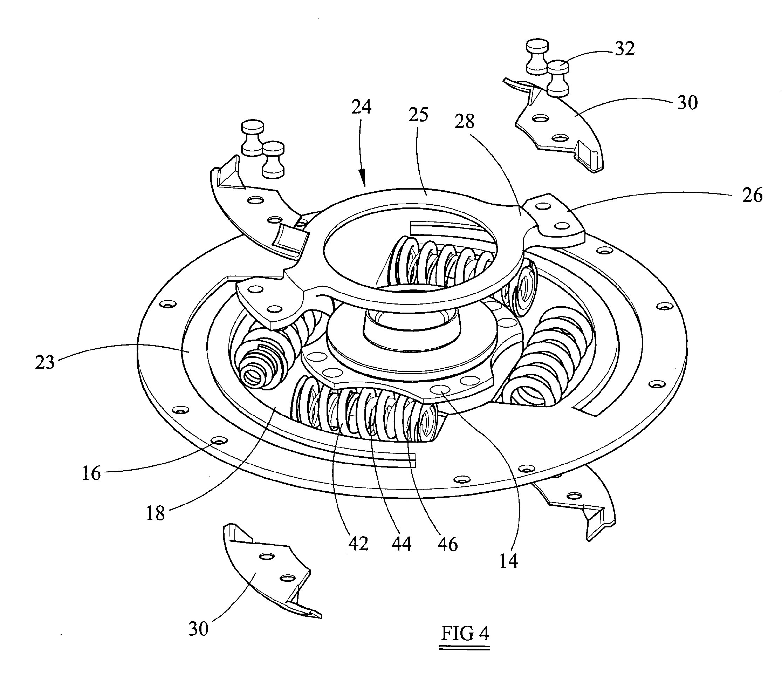

The output mass 6 is supported from the input mass via an axially extending support hub 10. The axially extending support hub 10 is secured to an inner peripheral portion of a radially extending flange plate 12 by any suitable means, including for example by fasteners 14 as best shown in Figure 4. The radially extending flange plate 12 is provided at a radially outer peripheral portion with a series of openings 16 by which the radially extending flange plate may be secured to the input mass, for example by bolts (not shown). The radially extending flange plate 12 is provided at an intermediate region with two circumferentially disposed windows 18.

Side plates 20,22 are postioned to each side of the radially extending flange plate 12. It will be seen that each of the side plates are provided at an intermediate region with windows broadly aligned with those of the radially extending flange plate 12. The side plates are secured to the output mass 6 in any suitable manner to prevent relative rotation therebetween.

The radially extending flange plate 12 is provided with a further set of windows 23 disposed radially outward of the two circumferentially disposed windows 18 of the intermediate region. In use a projecting part of the output mass 6 extends through one of the further set of windows 23, the ends of the further window 23 acting as a stop to prevent further relative angular displacement of the radially extending flange plate 12 and the output mass 6. It will be understood that this is in turn defines the maximum possible relative angular displacement of the input mass and the output mass.

The relative rotation of the input and output masses is also subject to frictional damping by friction damping means 50.

A further member 24 is mounted on the axially extending support hub 10. The further member 24 comprises a central boss or ring 25 for mounting the further member 24 on the axially extending support hub 10, and a pair of radially outward extending members 26. Each of the radially outward extending members 26 are displaced axially from the central ring 25 by a step or shoulder 28. In use, it will be seen that the step 28 allows each of the radially outward extending members 26 to be located within a respective window 18 in the intermediate portion of the radially extending flange plate 12. It will be understood that the radially extending members 26 are of greater axial thickness than the radially extending flange plate 12.

The further member 24 may be formed by any convenient means, for example by pressing, forging or any other suitable means.

At the end of each radially extending member 26 there are located a pair of carrier plates 30. Each plate of the pair of carrier plates 30 is secured to the other through the respective radially extending member 26 by any convenient means. In the embodiment illustrated in Figures 1 to 4 the carrier plates 30 are secured by rivets 32. Each of the carrier plates 30 is provided with an angularly disposed cover portion 34. At least a portion of each the carrier plates 30 extends radially outward of the two circumferentially disposed windows 18 of the intermediate region of the radially extending flange plate 12. In normal use the carrier plates 30 do not come into contact with the radially extending flange plate 12.

The torsional vibrational damper further comprises two pairs of compression spring assemblies 40 that are housed in the series of windows 18 formed in the radially extending flange plate 12 and the windows formed in the side plates 20,22. For each spring assembly 40 a first end of each said spring assembly 40 is seated against a first end of the respective windows 18 formed in the extending flange plate and the corresponding windows formed in the side plates 20,22. A second end of each spring assembly 40 is seated against a side face of the radially extending member 26 and within each of the angularly disposed cover portions 34. The angularly disposed cover portions 34 serve to prevent the second end of each spring assembly 40 from becoming displaced in use. It can be seen that the spring assemblies 40 within each of the windows 18 locate each of the radially extending side members 26 in a rotatable or angular position.

It will be seen that as a result of this construction, the use of relatively short spring assemblies 40 within a relatively large window 18 is permitted. The advantage of using relatively short spring assemblies within a relatively large window is that the curvature of the spring assemblies within the window is less pronounced. This prevents the spring assemblies from becoming axially displaced in use. This risk is further reduced by the retention of the second end of each spring assembly by the angularly disposed cover portions.

Together the further member 24 and connected carrier plates 30 form a balance arm assembly when located between the two spring assemblies 40.

In use, when relative movement of the input mass and output mass 6 occurs the two spring assemblies 40 in each window 18 are compressed. A small frictional torque may be applied to the balance arm 24 by means of, for example, an axial load formed spring washer between the central boss or ring 25 of the balance arm and an adjacent face on side plate 22 or the flange plate 12. It will be understood that in use, this controlled hysteresis in the system will prevent resonating of the balance arm assembly. The radially outwardly extending members 26 of the balance arm will move at half the angular rate of movement of the flange plate 12 relative to the output mass 6 if the spring assemblies 40 each provide the same load in the system.

The sets of spring assemblies 40 in each of the two windows 18 need not be identical but should match, that is pair with, the sets of spring assemblies in the other of the two windows 18. In this instance, the rotational movement of the balance arm assembly will be directly related to the load applied by the differing sets of spring assemblies 40 on either side of the radially outward extending members 26.

In comparison with previous four window/four spring torsional vibration dampers, there is less dead length. In other words, when considering the intermediate portion of the radially extending flange plate, the amount of circumferential length between the windows as a proportion of the total circumference is lower.

In use, a clutch cover and drive plate may be secured to the output mass 6 of the twin mass flywheel assembly

In the embodiment illustrated in Figures 1 to 4 each of the spring assemblies 40 comprises a first compression spring 42, a second compression spring 44 located within the first compression spring 42 and a third compression spring 46 located within the second compression spring 44. Each of the first compression spring 42, the second compression spring 44 and the third compression spring 46 have different compression characteristics. This has as an advantage that the effective spring rate of the spring assembly 40 may be chosen to fit best the operational characteristics expected when the twin mass flywheel assembly 2 is in use.

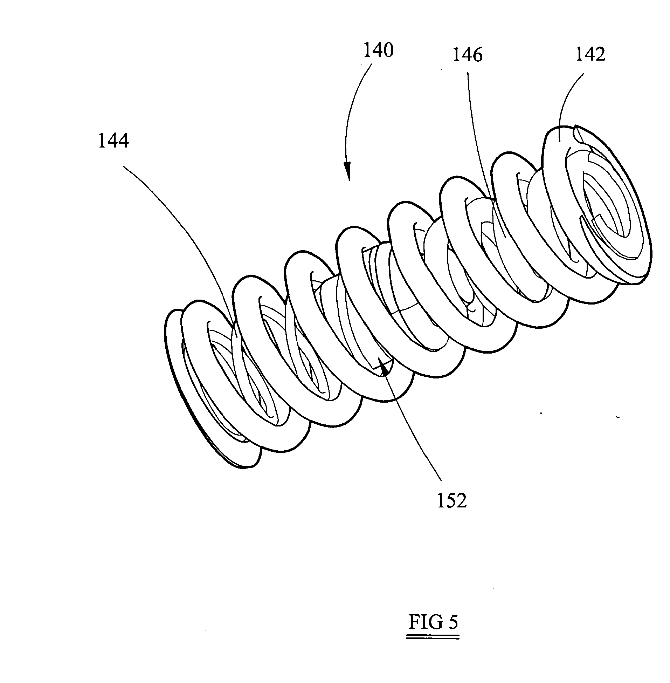

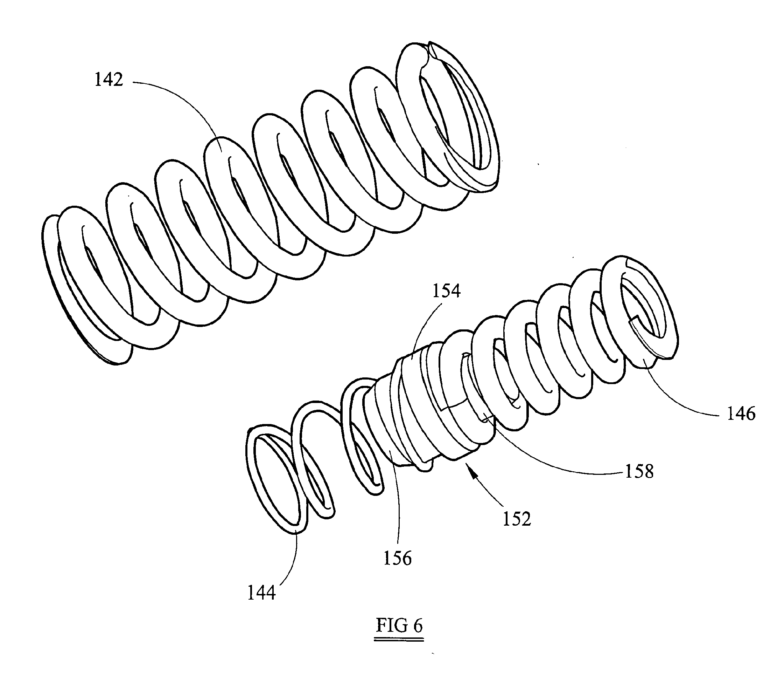

An alternative embodiment of a spring assembly 140 is illustrated in Figures 5 and 6. The spring assembly 140 comprises a first compression spring 142 and a second compression spring 144 and a third compression spring 146 each located within the first compression spring 142, the second compression spring 144 and the third compression spring 146 being separated from one another by a buffer piece 152. As may be seen the buffer piece 152 illustrated has a central web 154. On a first side of the web 154 a first protrusion 156 extends. In use, one end of the second compression spring 144 is seated against the first side of the web 154 such that the first protrusion 156 is located within one end of the second compression spring 144. Preferably the first protrusion 156 is a press fit within the second compression spring 144. On a second side of the web 154 a second protrusion 158 extends. In use, one end of the third compression spring 146 is seated against the second side of the web 154 such that the second protrusion 156 is located within one end of the third compression spring 146. Preferably the second protrusion 158 is a press fit within the third compression spring 146. Preferably, the first protrusion 156 and the second protrusion 158 share a common axis.

Each of the first compression spring 142, the second compression spring 144 and the third compression spring 146 have different compression characteristics. This also allows the effective spring rate of the spring assembly 140 to be chosen to fit best the operational characteristics required.

## Claims

1. A twin mass flywheel assembly including an input mass for connection with a vehicle engine and an output mass (6) for connection with a vehicle drive line, the input and output masses being relatively rotatable against the action of a damping means acting between the input and output masses to absorb or attenuate torsional vibrations emanating from the engine, a radially extending flange (12) secured to an outer peripheral portion of the input mass provided with a plurality of windows (18) and an axially extending support hub (10) secured to an inner peripheral portion of the flange (12), the output mass (6) being supported from the hub (10) **characterised in that** the twin mass flywheel further comprises a balance arm assembly rotatably mounted to the hub (10), carrier means (30) and a plurality of spring assemblies (40), said balance arm assembly comprising a central boss (25), a plurality of radially extending arms (26), each of said radially extending arms (26) being adapted to locate within a corresponding one of said plurality of windows (18), and each of said arms (26) being held in position in said window (18) by a pair of spring assemblies (40), each of said spring assemblies (40) being located between at a first end one end of the window (18) and at a second end the carrier means (30).

2. A twin mass flywheel according to claim 1, **characterised in that** it further comprises side plates (20,22) disposed to either side of the radially extending flange (12).

3. A balance arm assembly comprising a hub (10), a radially extending flange plate (12) secured to the hub (10) having a plurality of circumferentially spaced windows (18), a balance arm assembly rotatably mounted to the hub (10), carrier means (30) and a plurality of spring assemblies (40), said balance arm assembly comprising a central boss (25), a plurality of radially extending arms (26), each of said radially extending arms (26) being adapted to locate within a corresponding one of said plurality of windows (18), and each of said arms (26) being held in position in said window (18) by a pair of spring assemblies (40), each of said spring assemblies (40) being located between at a first end one end of the window (18) and at a second end the carrier means (30).

4. A balance arm assembly according to claim 3, **characterised in that** each spring assembly (40) comprises a plurality of springs.

5. A balance arm assembly according to claim 3 or claim 4, **characterised in that** the spring assembly comprises a first compression spring (42), a second compression spring (44) located within the first compression spring (42) and a third compression spring (46) located within the second compression spring (44).

6. A balance arm assembly according to any of claims 3 to 5, **characterised in that** the plurality of windows (18) is two windows.

7. A spring assembly comprising a first outer spring (142) with a second spring (144) and a third spring (146) located within the first spring (142), the second spring (144) and the third spring (146) being separated by a buffer piece (152).

8. A twin mass flywheel according to either claim 1 or claim 2 or a balance arm assembly according any of claims 3 to 6 provided with at least two spring assemblies according to claim 7.
